Europäisches Patentamt

(19) European Patent Office

Office européen des brevets

(11) Numéro de publication: **0 002 971**
**B1**

(12) **FASCICULE DE BREVET EUROPEEN**

(21) Numéro de dépôt: **78400223.0**

(22) Date de dépôt: **08.12.78**

(51) Int. Cl.³: **H 04 B 9/00 G 02 B 5/14**

(54) **Dispositif de couplage à une ligne de transmission optique et système de transmission comportant de tels dispositifs**

(30) Priorité: **22.12.77 FR 7738828**

(43) Date de publication de la demande:
**11.07.79 Bulletin 79/14**

(45) Mention de la délivrance du brevet:
**10.12.80 Bulletin 80/25**

(84) Etats contractants désignés:
**DE GB IT NL SE**

(56) Documents cités:
FR - A - 2 304 934
US - A - 3 801 819

ELECTRICAL COMMUNICATION vol. 52, n° 3
1977
London
M. CHOWN "Repeaters for Optical
Communications Systems", pages 170 à 178

IBM TECHNICAL DISCLOSURE BULLETIN vol. 17
n° 4, septembre 1974
New York
E. G. LEAN: "Optical Switch and Modulator in
Parallel Waveguides", pages 1210 à 1213

IBM TECHNICAL DISCLOSURE BULLETIN vol. 18
n° 2, juillet 1975
New York
R. G. BURKE et al.: "Fiber Optic Repeater bypass
Switch" pages 481 et 482

ELECTRONIC EQUIPMENT NEWS, mai 1975
London
"Data Transmission Using Cmos" pages 24 et 25

(73) Titulaire: **"THOMSON-CSF" - SCPI**
**173, Boulevard Haussmann**
**F - 75360 Paris Cedex 08 (FR)**

(72) Inventeur: **de Corlieu, Guy**
**"THOMSON-CSF" - SCPI 173, bld Haussmann**
**F - 75360 Paris Cedex 08 (FR)**
**Reymond, Jean Claude**
**"THOMSON-CSF" - SCPI 173, bld Haussmann**
**F - 75360 Paris Cedex 08 (FR)**
**d'Auria, Luigi**
**"THOMSON-CSF" - SCPI 173, bld Haussmann**
**F - 75360 Paris Cedex 08 (FR)**
**Huignard, Jean-Pierre**
**"THOMSON-CSF" - SCPI 173, bld Haussmann**
**F - 75360 Paris Cedex 08 (FR)**

(74) Mandataire: **Trocellier, Roger, et al**
**"THOMSON-CSF" - SCPI 173, bld Haussmann**
**F - 75360 Paris Cedex 08 (FR)**

Dispositif de couplage à une ligne de transmission optique et système de transmission comportant de tels dispositifs

La présente invention concerne un dispositif de couplage à une ligne de transmission comportant de tels dispositifs. L'invention se rapporte plus précisément à la réalisation d'un dispositif de couplage inséré en série sur une ligne de transmission optique qui est a appelée ligne bus selon une terminologie courante dans le domaine de la transmission de données numériques. L'invention s'applique avantageusement à former une configuration où la ligne bus est bouclée sur elle-même, chaque dispositif coupleur permettant de relier à la ligne une station émettrice et/ou réceptrice, l'une des stations dite station principale assurant la gestion de l'ensemble du système de transmission ainsi constitué.

Une ligne de transmission optique peut consister en un unique guide d'ondes de lumière ou en plusieurs guides regroupés parallèlement en un faisceau. Les guides d'ondes de lumière sont généralement réalisés avec des fibres optiques. Le guide d'ondes est monofibre dans le cas où il comporte une seule fibre et multifibre dans le cas où il regroupe un faisceau de fibres. La fibre optique comporte une âme transparente gainée avec un matériau d'indice de réfraction inférieur à celui de l'âme.

Dans des installations fixes, au sol, ou mobiles, sur véhicules, avions ou bateaux, il est souvent nécessaire de réaliser un réseau de commutation pour interconnecter plusieurs stations distantes les unes des autres. Pour établir ces réseaux de transmission en utilisant des liaisons par guides optiques une grande variété de schémas d'interconnexions peuvent être conçus, dérivés de ceux utilisant des conducteurs électriques. Pour raccorder plusieurs stations au moyen d'une ligne bus ouverte ou fermée, on utilise fréquemment des coupleurs en T qui peuvent être soit passifs, réalisés au moyen généralement de guides et de mélangeurs optiques, soit actifs, comportant un circuit électrique avec un transducteur opto-électrique à l'entrée et électro-optique en sortie. Les inconvénients de ces solutions sont dus essentiellement aux pertes d'insertion présentées dans le cas de coupleurs optiques, pertes qui font que le nombre total de stations pouvant être interconnectées dans le système est très vite limité, généralement entre cinq et dix, et dans le cas de coupleurs actifs au bruit causé par les circuits électroniques entraînant une diminution de fiabilité, et aux interruptions de trafic à la suite de pannes.

Suivant une autre technique décrite dans la demande de brevet français n° 75.08428 publiée sous le n° 2.304.934, il est connu de réaliser un dispositif de couplage comportant une voie optique et une voie électrique en parallèle pour fournir un court-circuit optique de la voie électrique, laquelle peut consister en un répéteur optoélectrique. Cette solution utilise un dispositif optoélectrique qui peut prendre deux états selon la valeur d'un signal de commande élaboré à partir de l'alimentation électrique; la voie électrique comporte un photodétecteur connecté à travers un circuit de traitement et de liaison à un photoémetteur. Le dispositif opto-électrique est du type à réflexion variable, tel une cellule à cristal liquide, et est combiné avec des dioptres de focalisation aux extrémités des deux voies. La cellule est totalement réfléchissante dans un ètat et partiellement transparente dans l'autre état. Ainsi, la transmission s'effectue en fonctionnement normal en utilisant la voie électrique et elle s'effectue exceptionnellement et en totalité par la voie optique en cas de panne d'alimentation électrique. Cette solution présente divers inconvénients inhérents à la complexité du montage optique et au fonctionnement à réflexion variable de la cellule, ces inconvénients se traduisent par des limitations des caractéristiques de robustesse, fiabilité, économie et des performances techniques, notamment de la fréquence maximale de commutation.

La présente invention a pour but d'apporter un remède aux difficultés signalées des montages antérieurs en utilisant également un court-circuit optique en parallèle sur une voie électrique, Un dispositif de couplage selon l'invention remédie au défauts de pertes d'insertion des coupleurs optiques passifs, aux défauts de pannes électriques des coupleurs actifs, et aux limitations de la solution à court-circuit optique précitée.

Les avantages obtenus résident essentiellement en ce qu'un système de transmission optique équipé de dispositifs de couplage selon l'invention peut comporter un grand nombre de stations à interconnecter, que la continuité de la liaison optique reste assurée par la ligne bus et la voie optique entre les stations en amont et en aval d'une station en panne, et que le système de transmission du type bus parallèle ou bus série présente une fiabilité élevée et peut fonctionner à des fréquences de commutation très rapides.

Suivant une caractéristique de la présente invention, il est réalisé un dispositif coupleur destiné à coupler une station à une ligne bus au moyen d'une voie électrique groupant, un photodétecteur connecté à travers un circuit de traitement et de liaison à un photo-émetteur, et un circuit d'alimentation électrique, le dispositif coupleur comportant un dispositif obturateur électro-optique commandé électriquement par tout ou rien par un circuit de commande, et deux dispositifs dérivateurs optiques du type en Y suivant lequel une ligne optique primaire se partage en deux lignes optiques secondaires, les dispositifs dérivateurs étant couplés l'un à l'autre par l'une de leurs lignes secondaires et par l'intermédiaire du dispositif obturateur en formant une voie optique de liaison disposée en parallèle sur la voie électrique, les deux lignes secondaires restantes étant couplées respectivement au photodétecteur et au photo-émetteur, le circuit de commande étant lui-même commandé à partir du circuit d'alimentation en sorte que le dispositif obturateur présente l'état opaque lorsque la voie électrique est alimentée et l'état transparent dans le cas contraire.

D'autres particularitès et avantages de la présente invention apparaîtront dans la description qui suit, donnée à titre d'exemple non limitatif à l'aide des figures qui représentent:

— la figure 1, un schéma simplifié d'un dispositif de couplage conforme à l'invention;
— la figure 2, des formes d'ondes relatives aux signaux de la voie électrique;
— la figure 3, un schéma d'un exemple de réalisation d'un dispositif de couplage conforme à l'invention et associé à une station d'émission-réception annexe;
— les figures 4 à 6, des schémas et une courbe relatifs à des réalisations selon la figure 3;
— la figure 7, un schéma d'un système de transmission optique comportant des dispositifs de couplage selon l'invention pour former une ligne bus unidirectionnelle.

Dans un système de transmission unidirectionnel du type bus-série, la ligne bus est disposée entre l'émetteur d'une station et le récepteur de la station suivante; la continuité de la ligne reste assurée au niveau de chaque station par ré-émission ou au moyen d'un circuit de liaison aménagé entre la voie réception et la voie émission pour pouvoir transmettre l'information en aval, en accord avec une procédure de gestion prédéterminée.

Dans un système de transmission unidirec-tionnel du type bus parallèle, le branchement des stations s'effectue en dérivation sur la ligne et est obtenu au moyen de coupleurs dits en T comportant, une voie de liaison insérée en série sur la ligne bus et deux voies de raccordement respectivement avec les circuits de réception et d'émission de la station. La voie de liaison est optique dans le cas de coupleurs passifs et électrique dans le cas de coupleurs actifs, elle joue le même rôle que celui indiqué précédemment pour le circuit de liaison dans le concept de raccordement du type bus série.

Ainsi, quel que soit le système de transmission prévu, une liaison électrique ou optique est créée, insérée en série sur la ligne bus au niveau de la station à raccorder.

Le dispositif de couplage selon l'invention est prévu pour assurer cette continuité du trafic d'mont en aval par une voie électrique, cette voie pouvant faire partie du coupleur selon un concept de réalisation de coupleur actif en T, ou être extérieure au coupleur et faire partie de la station annexe selon un concept de montage du type bus-série.

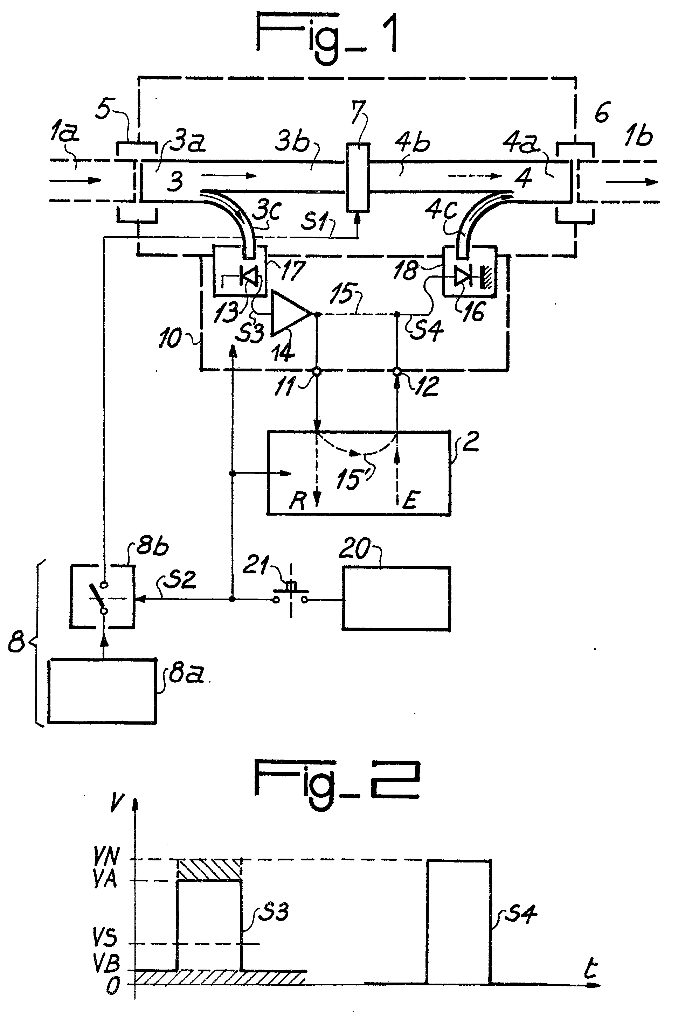

Sur le diagramme simplifié de la figure 1, la voie électrique de liaison référencée 10 a été représentée, à titre d'exemple, incluse dans le dispositif coupleur.

Suivant l'invention, le dispositif coupleur comporte une deuxième voie de liaison du type optique, agencée pour fonctionner en cas de défaillance de la voie électrique, cette deuxième voie se trouvant disposée en parallèle sur la voie électrique qui assure la liaison d'amont en aval selon le mode normal de fonctionnement.

En se reportant à la figure 1, le dispositif de couplage comporte une entrée et une sortie optiques, aménagées pour effectuer le raccordement optique respectivement avec les extrémités 1a et 1b d'une ligne bus optique extérieure, le dispositif se trouvant interposé sur la ligne. Il comporte en outre une entrée et une sortie, optiques ou électriques, pour le raccordement à une station annexe 2, émettrice et/ou réceptrice.

A l'entrée, un dispositif optique 3 permet de diviser la voie optique incidente provenant de la ligne 1a en deux voies secondaires. A la sortie un dispositif optique 4 similaire, permet selon le montage inverse de regrouper deux voies optiques en une voie unique allant vers la ligne 1b. Ces dispositifs optiques peuvent être réalisés de différentes manières, par exemple, en utilisant de manière connue une fibre mélangeuse de section correspondant à celle de la ligne. Pour diminuer les pertes d'insertion, les dispositifs optiques 3—4 sont réalisés, de préférence, à l'aide de dérivateurs optiques à deux voies encore appelés coupleurs en Y, comportant une branche ou ligne primaire qui se subdivise en deux branches ou lignes secondaires. L'énergie lumineuse transmise par le branche primaire 3a du dispositif d'entrée 3 se répartie dans la branche secondaire 3b, 3c en fonction des sections relatives de ces branches; à l'inverse, l'énergie lumineuse circulant dans la branche secondaire 4b ou 4c du dispositif de sortie 4 se retrouve intégralement dans la branche primaire 4a de sortie. Les éléments 5 et 6 symbolisent des connecteurs optiques d'entrée et de sortie, considérés réalisés selon des techniques connues.

Une branche secondaire 3b, 4b de chaque dispositif dérivateurs 3, 4, est utilisée pour relier l'un à l'autre ces dispositifs et former avec les branches primaires terminales 3a, 4a, une voie optique 3a-3b-4b-4a en série sur la ligne bus optique. Conformément à l'invention, cette liaison s'effectue à travers un dispositif obturateur opto-électrique 7 commandé à partir d'un circuit de commande 8 annexe. La commande électrique s'effectue par tout ou rien en sorte que le dispositif obturateur 7 se comporte comme un élément transparent pour une première valeur du signal de commande S1 qui lui est appliqué et, comme un élément opaque pour une deuxième valeur de ce signal S1.

En fait le dispositif obturateur 7 joue un rôle équivalent à celui d'un interrupteur sur une liaison électrique.

Le circuit 10 permet de réaliser la liaison par voie électrique et a été représenté inclus dans le coupleur. Il est connecté aux extrémités des lignes secondaires 3c, 4c, et assure par ailleurs les liaisons électriques extérieures par des bornes 11, 12, vers le récepteur R et l'émetteur E de la station annexe 2. La voie électrique est formée successivement de manière conventionnelle par un transducteur opto-électrique, ou photodétecteur, tel une photodiode 13 à l'entrée, un circuit opérationnel d'amplification et de remise en forme 14, une liaison 15 par connexion, et un transducteur opto-électrique, ou photo-émetteur, tel une diode électro-luminescente 16. Les éléments 17, 18 représentent des connecteurs opto-électriques considérés réalisés selon des techniques connues.

La voie électrique 10 se trouve ainsi connectée en parallèle sur la voie optique 3b-7-4b qui fonctionne lorsque la première nommée est hors fonctionnement. Ce résultat peut être produit de la manière suivante: le circuit 20 symbolise l'alimentation annexe des circuits électriques via, éventuellement, un interrupteur de mise en marche 21; le circuit de commande 8 de l'obturateur 7 peut consister en un générateur continu 8a et un circuit porte 8b sur la liaison de commande S1. Le circuit porte 8b est commandé à partir d'un signal S2 d'alimentation des circuits électroniques, en sorte que le dispositif obturateur 7 est transparent dés que les circuits 10—2 ne sont pas alimentés (signal S2 absent ou interrupteur 21 sur arrêt), et inversement est opaque lorsque ces circuits sont alimentés.

Il en résulte que la liaison optique est assurée automatiquement entre les extrémités 1a et 1b de la ligne bus, dès que la voie électrique est hors fonctionnement par défaut d'alimentation. La liaison unidirectionnelle par la ligne bus est par suite maintenue entre la station en amont et celle en aval, évitant l'interruption de trafic. Lorsque le trafic se produit normalement via les circuits électroniques 10—2, le signal de sortie S4 est formé d'impulsions dont l'amplitude est normalisée à une valeur prédéterminée VN comme représenté sur la figure 2. Le signal S3 représente le signal détecté à l'entrée suivante ayant subi une atténuation VN — VA dans le bus et le dispositif d'entrée et qui se trouve superposé à des signaux de bruit d'amplitude VB. En toute regueur le signal S4 ne peut être totalement exempt de signaux de bruit produits par les circuits. Le signal optique qui va se trouver formé en sortie sur la ligne 1b va présenter une intensité lumineuse fonction de l'amplitude du signal de sortie. Suivant ce mode normal de fonctionnement, les pertes d'insertion dues au dispositif coupleur et à la liaison bus peuvent être ainsi sensiblement compensées, autorisant le branchement d'un nombre élevé de stations sur la ligne, par exemple une centaine, la limitation provenant essentiellement du bruit des circuits électroniques.

Si maintenant, on considère la liaison établie par la voie optique, le dispositif de couplage introduit des pertes d'insertions dues successivement: aux connecteurs 5 et 6, aux dérivateurs 3 et 4 et à l'obturateur 7. Afin de limiter ces pertes, le diamètre de la branche 3b (4b) de la voie optique est d'ores et déjà choisi largement supérieur à celui de la branche 3c (4c). En outre, le dispositif obturateur opto-électrique 7 est choisi à faibles pertes, de préférence du type à lame PLZT disposée entre deux polariseurs comme il sera décrit ultérieurement à titre d'exemple de réalisation.

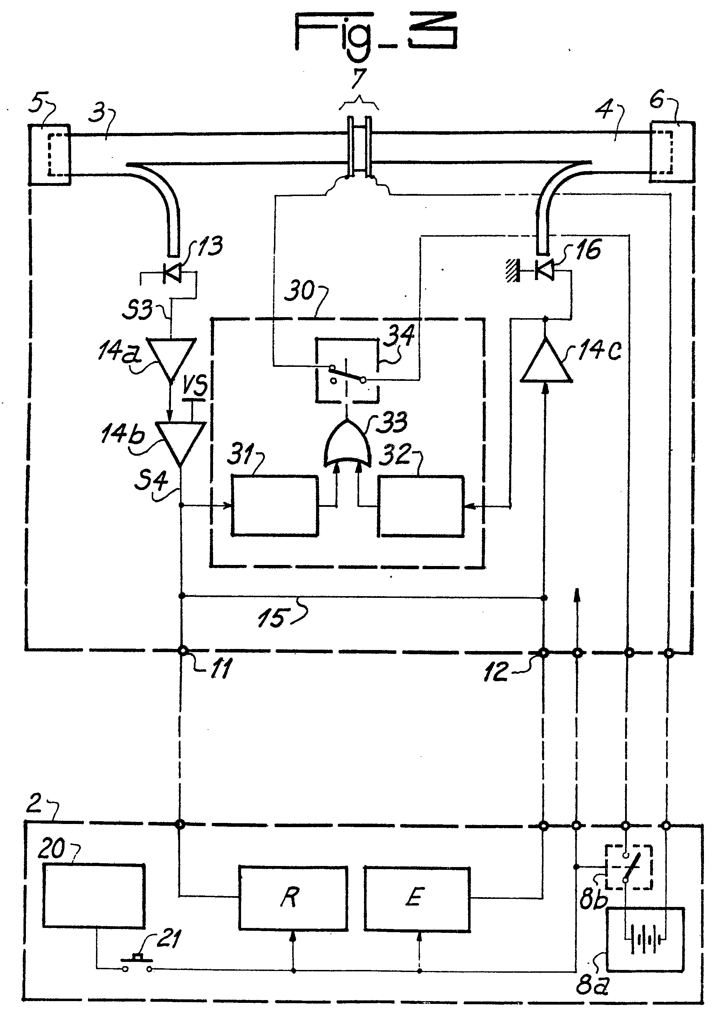

Diverses formes de réalisations sont envisageables pour les dispositif coupleur: l'alimentation 20 et le générateur 8a ainsi que les éléments 8b et 21 peuvent être réunis dans un ensemble d'alimentation unique qui sera de préférence situé à l'exterieur dans la station 2; tout ou partie des éléments du circuit 10 peuvent être également disposés extérieurement dans la station 2, par exemple la liaison 15 peut être reportée en 15'; le raccordement entre le dispositif coupleur et la station peut s'effectuer optiquement ou électriquement selon que l'on se place en amont ou en aval des transducteurs, Suivant le mode de réalisation représenté sur la figure 1 le raccordement à la station 2 s'effectue par des liaisons électriques à partir des bornes 11 et 12, une réalisation correspondante plus détaillée est décrite dans ce qui suit à l'aide des figures 3 à 5.

Le circuit 14, se décompose en circuits opérationnels, groupant un amplificateur 14a et un comparateur 14b à un seuil VS (S3, figure 2) qui délivre le signal normalisé S4. Un circuit amplificateur complémentaire 14c peut être côté sortie pour attaquer la diode électro-luminescente 16 avec le niveau désiré lorsque le signal provient d'un émetteur E éloigné via la liaison extérieure par la borne 12.

La figure 4 représente en vue explosée le montage d'un obturateur 7 à lame PLZT groupant un premier plan polariseur 7a, un deuxième plan polariseur 7b et entre eux une lame de céramique PLZT 7c sur une face de laquelle est déposé un circuit 7d formé de réseaux d'électrodes entrelacées. Un des états de l'obturateur est obtenu pour une valeur de tension S1 nulle aux bornes des réseaux 7d, et le deuxième état par application de la tension d'alimentation délivrée par le circuit 8a. On considère par exemple que OV correspond à l'état transparent et S1 = 50V continu provoque l'état opaque. L'inverse est produit selon que les polariseurs 7a et 7b sont croisés, c'est-à-dire orientés à $\pi/2$ relativement, ou parallèles. Un obturateur à lame PLZT est décrit notamment dans APPLIED OPTICS (vol. 14, N° 8/August 1975 pages 1866—1873, article "PLZT electrooptic shutters: applications" de J. Thomas Cutchen, James O. Harris, Jr. and Georges R. Laguna). Pour l'application envisagée, le dispositif obturateur 7 peut être réalisé en effectuant successivement les dépôts conducteurs 7d sur une lame de céramique PLZT, puis des dépôts en couche de matériau polariseur; l'ensemble peut présenter une largeur axiale de l'ordre de 120 $\mu$m et peut être scellé aux extrémités des fibres 3d et 4d par des colles optiques d'indice de réfraction déterminé en conséquence.

La voie optique constitue une voie en dérivation, ou shunt, sur la voie électrique ou la station. Cette voie est fermée en l'absence d'alimentation électrique des circuits et il est nécessaire dans ce cas qu'elle introduise des pertes assez limitées pour le signal optique transmis. En fonctionnement normal la voie électrique présente un temps de transit supérieur à celui de la voie optique et il y a lieu de s'assurer que cette dernière procure un isolement suffisant et n'introduit pas de perturbations résultant de diaphonies en sortie. Ces caractéristiques sont liées au choix de l'interrupteur optique 7 et sont obtenues aisément avec un montage à lame PLZT et polariseurs du type décrit précédemment.

La courbe de la figure 5 illustre des caractéristiques possibles d'un tel montage; elle représente la transmission à l'état fermé pour des angles d'incidence $\theta$ du rayonnement lumineux parvenant sur le plan du polariseur d'entrée 7a, variant entre — 30° et +30°, l'angle 0° correspondant à la normale c'est-à-dire la direction Z de l'axe optique du montage et des extrémités de fibres 3b et 4b. La plage de variation de l'angle d'incidence $\theta$ correspond à une ouverture numérique de 0,5. Le taux de transmission varie entre $10^{-5}$ pour les ondes lumineuses normales ($\theta = 0°$) et 3 à 4 $10^{-5}$ pour les ondes marginales ($\theta = \pm 30°$) soit un écart de 5 dB. A l'état ouvert, le taux de transmission du montage PLZT est de 0,3 à 0,4. Ainsi le dispositif obturateur 7 présente un affaiblissement relatif de $10^{-4}$ environ, soit 40 dB en puissance, entre les deux états de fonctionnement pour l'ouverture numérique envisagée de 0,5. Ainsi, les signaux parasites transmis en position fermée, sont de très faible amplitude et introduisent avec les signaux S4 convertis par la diode électroluminescente en ondes lumineuses un taux de diaphonie très faible et inférieur au niveau de bruit électrique VB et a fortiori, au seuil VS de détection du circuit 14b, le seuil VS étant prédéterminé supérieur au niveau maximal de bruit envisagé.

La liaison de la voie électrique peut consister en un circuit plus élaboré qu'une simple connexion. Suivant l'exemple représenté sur la figure 6, le circuit de liaison comporte un circuit 15a de stockage et d'identification d'adresse et de deux circuits portes 15b, 15c. Après identification d'adresse, le signal est transmis d'une part, vers le récepteur via la porte 15b à chaque fois que le message intéresse la station considérée, et d'autre part, vers la sortie du coupleur via la porte 15c à chaque fois que le message intéresse une ou plusieurs stations en aval. Le retard introduit par le circuit 15a est dû à l'identification d'adresse avant retransmission et peut être considéré comme négligeable. Le circuit 15 est réalisable aisément selon diverses techniques connues, sa réalisation dépendant essentiellement du type de codage utilisé pour la transmission.

De manière préférée, al voie électrique de liaison du dispositif coupleur est dotée de moyens complémentaires assurant la détection de pannes en sorte de commander la liaison par la voie optique lorsque les circuits de la voie électrique, quoique alimentés, sont néanmoins hors fonctionnement par suite d'une panne de l'un d'entre eux. Ces moyens complémentaires 30 peuvent être réalisés comme représenté à titre d'exemple sur la figure 3 le signal étant prélevé d'une part en fin de la voie de réception du coupleur, entre la sortie du comparateur 14b et la borne de sortie 11 et d'autre part, en fin de la voie d'émission au niveau de la diode émettrice 16. Ces signaux commandent respectivement un circuit monostable 31, 32, du type redéclenchable. Les sorties des monostables sont regroupées dans un circuit porte OU 33 pour commander un circuit interrupteur 34 analogue au circuit 8b.

Le fonctionnement est le suivant, en l'absence de signal de message formé d'impulsions brèves à l'entrée du circuit 31 ou 32 et ceci, après une durée supérieure à la constante de temps du monostable, la sortie de ce dernier bascule d'une valeur de fonctionnement à une valeur de repos pour lesquelles on considère respectivement les états numériques "0" et "1". Ainsi le circuit porte 34 est actionné et la tension aux bornes de l'obturateur 7 devient nulle lui rendant son état transparent et l'établissement de la liaison optique. La durée du monostable est déterminée supérieure à la période la plus grande des impulsions formant les messages. En cas d'arrêt de trafic de durée assez longue, le circuit 30 produit automatiquement la liaison par la voie optique. Dès la première impulsion S4 d'un message, la sortie des monostables 31, puis 32, change de valeur et le mode de fonctionnement normal par la voie électrique se trouve rétabli.

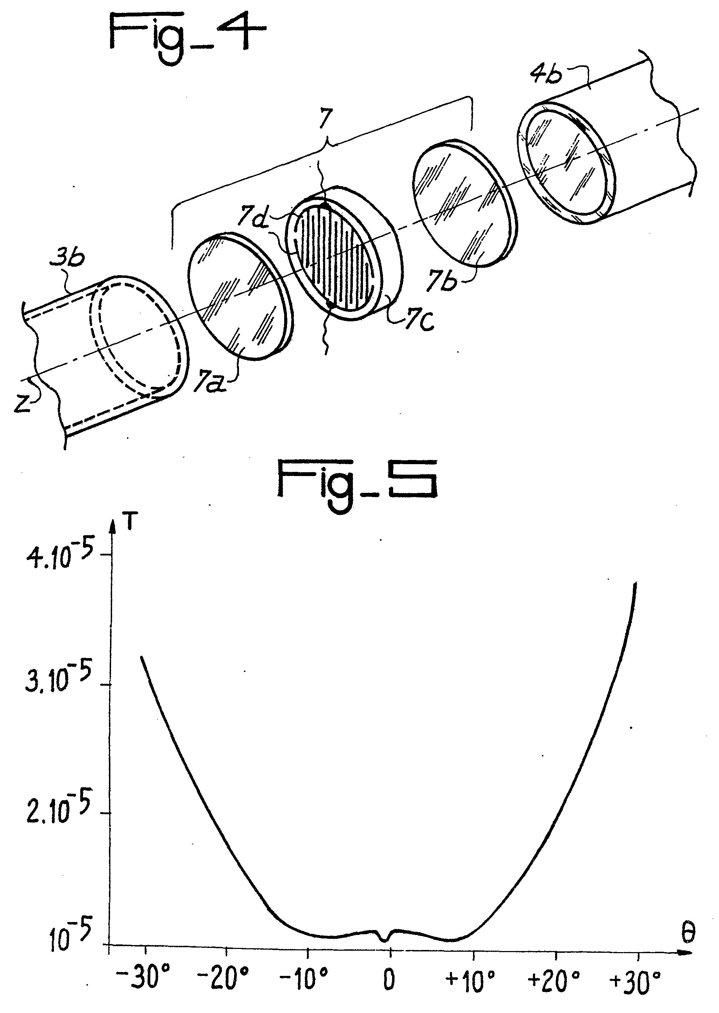

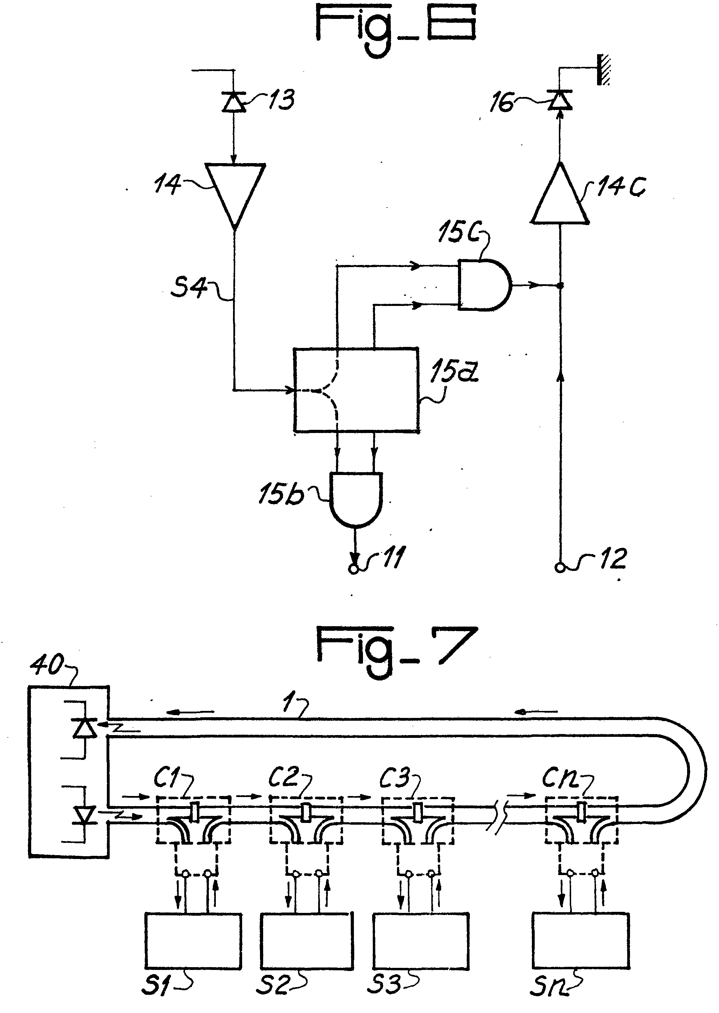

La figure 7 représente de manière simplifiée un schéma d'un système de transmission par voie optique utilisant des coupleurs selon l'invention. Il comporte une unité de gestion ou unité centrale 40, et la ligne bus 1 bouclée par l'intermédiaire de dispositifs coupleurs C1 à Cn permettant de relier respectivement les stations, ou terminaux d'abonnés, S1 à Sn à la ligne bus unidirectionnelle.

Le dispositif de couplage décrit peut être réalisé de diverses manières selon que la voie électrique de liaison est en tout ou partie comprise dans le coupleur, ou dans la station annexe; la liaison peut s'effectuer par des circuits (figure 6) et une forme de réalisation intéressante consiste à disposer dans le coupleur, comme circuit de liaison, un ensemble codeur-décodeur connu sous l'appellation modem. Le modem est alimenté par la photodiode 13 et alimente la diode émettrice 16: le modem fournit à la station d'exploitation annexe le signal d'horloge reconstitué et le signal décodé sous forme numérique NRZ, il reçoit de la station, sous forme NRZ le signal à émettre, et le signal d'horloge correspondant. Les circuits d'alimentation électrique et de commande d'obturateur sont avantageusement disposés dans la station.

De manière préférée, le dispositif de couplage comporte un obturateur 7 du type à lame PLZT et des moyens 30 de détection de pannes. Les circuits interrupteurs 8b, 34 peuvent être réalisés avec des transistors à effet de champ et les circuits 14a, b, c en logique TTL; l'élément 13 consiste généralement en une photodiode PIN.

A titre d'exemple, les performances présentées peuvent être les suivantes on considère une transmission dans une monofibre de diamètre voisin de 300 $\mu$m (1a, 3a, 4a, 1b) et une référence en puissance de 0 dB du signal optique à l'entrée 1a. Le connecteur d'entrée 5 introduit une perte de —1dB environ. Le partage du signal optique entre les branches 3b et 3c est fixé par le choix des diamètres, à 80% en 3b soit —1dB et à 20% en 3c soit —7dB. Le signal reçu accuse donc 8dB d'affaiblissement.

En fonctionnement normal (abonné présent et en opération), les signaux sont remis en forme et renvoyés dans le bus par la voie 4c—4a. Pour obtenir un réseau itératif, c'est-à-dire retrouver à nouveau 0dB sur la ligne 1b qui va à l'abonné suivant (en négligeant les pertes X dans la ligne bus), le niveau en 4c doit se situer à +1dB pour compenser la perte due au connecteur de sortie 6 (ou + (1 + x) dB en tenant compte des pertes de ligne jusqu'au coupleur suivant).

En fonctionnement de secours par la voie optique (abonné absent, ou en arrêt, ou en panne), l'obturateur 7 est transparent et si l'on considère une transparence de 0,3 il introduit une perte de —5dB à laquelle s'ajoute —1dB de perte d'insertion respectivement avec les extrémités de fibres 3b et 4b soit —7dB au total et en fin de compte —9dB en tenant compte des pertes dues aux connecteurs terminaux 5 et 6. Il apparaît donc que ce mode de fonctionnement affaiblit le signal optique de 9dB environ. Cette valeur est largement tolérée par les amplificateurs de réception 14 qui admettent aisément 40dB en tension correspondant à 20dB optiques; une valeur supérieure est tolérée moyennant l'adjonction d'un circuit de contrôle automatique de gain rapide.

Ainsi, un système de transmission équipé de dispositifs coupleurs selon l'invention pour connecter $n$ stations pourra fonctionner avec un nombre minimal de stations en fonctionnement limité à n/3, la condition à satisfaire étant que le nombre des stations successives hors fonctionnement ou en panne n'excède pas deux dans les conditions d'affaiblissement précitée. La limitation du nombre totale $n$ de stations ou abonnés est fonction essentiellement du bruit des circuits dont la valeur maximale est liée au paramètre $\sqrt{n}$.

**Revendications**

1. Dispositif de couplage à une ligne de transmission optique, du type comportant interposé sur la ligne, une voie optique et une voie électrique en parallèle, la voie optique comportant un dispositif électro-optique pouvant prendre deux états selon la valeur d'un signal électrique de commande, la voie électrique comportant un photodétecteur connecté à travers un circuit de traitement et de liaison à un photoémetteur, et un circuit d'alimentation électrique, l'agencement étant tel que la transmission s'effectue normalement par la voie électrique et, en cas d'absence d'alimentation de celle-ci, par la voie optique par suite du changement d'état du signal électrique de commande du dispositif électro-optique, ledit dispositif de couplage étant plus particulièrement destiné à coupler une station à une ligne bus par le voie électrique et étant caractétisé en ce qu'il comporte deux dispositifs dérivateurs optiques (3—4) du type en Y suivant lesquels une ligne optique primaire est partagée en deux lignes optiques secondaires, ces dérivateurs étant couplés l'un et l'autre par une première de leur ligne secondaire (3b—4b) et par l'intermédiaire du dispositif électro-optique (7) pour former la voie optique, et par la deuxième de leur ligne secondaire (3c, 4c) respectivement au photoémetteur (16) et au photodétecteur (13) de la voie électrique, le dispositif électro-optique étant du type obturateur présentant l'état opaque en fonctionnement normal et l'état transparent en l'absence d'alimentation de la voie électrique (S2).

2. Dispositif de couplage selon la revendication 1, caractérisé en ce qu'il comporte en outre des moyens (30) de détection de panne des circuits de la voie électrique déclenchant la commande électrique de changement d'état du dispositif obturateur et la liaison par la voie optique en cas de panne autre que celle résultant de l'absence d'alimentation.

3. Dispositif de couplage selon l'une quelconque des revendication 1, 2, caractérisé en ce que le dispositif obturateur est du type à lame de céramique PLZT (7c, 7d) disposée entre deux polariseurs (7a, 7b).

4. Dispositif de couplage selon la revendication 3, caractérisé en ce que le circuit d'alimentation électrique (20) produit un signal· d'alimentation (S2) des circuits de la voie électrique et des circuits de la station annexe éventuellement couplée, et que le circuit de commande (8), comporte un générateur (8a) de tension continue (S1) et une circuit interrupteur (8b) interposé sur la liaison de commande allant de ce générateur au dispositif obturateur et qui est commandé par ce signal d'alimentation électrique.

5. Dispositif de couplage selon l'une quelconque des revendication 1 à 4, caractérisé en ce que la voie électrique comporte, une photodiode (13) alimentant un circuit de traitement par amplification (14a) et remise en forme (14b), un circuit amplificateur terminal (14c) alimentant une diode électroluminescente (16) et des moyens de liaison (15, 11, 12) pour relier la sortie du circuit de traitement à l'entrée de l'amplificateur terminal et à l'entrée de réception d'une station annexe, ainsi que pour relier l'entrée de l'amplificateur terminal à la sortie émettrice de la station annexe.

6. Dispositif de couplage selon la revendication 5, caractérisé en ce que les moyens de liaison comportent un circuit de stockage d'identification d'adresse (15a) connecté à un premier circuit porte (15c) pour transmission à l'amplificateur terminal des signaux destinés à une utilisation en aval du coupleur, et connecté à un deuxième circuit porte (15b) pour transmission des signaux destinés à une station d'exploitation annexe (2).

7. Dispositif de couplage selon la revendication 2 et l'une quelconque des revendications 5 ou 6, caractérisé en ce que les moyens détecteurs de panne comportent un premier circuit de traitement monostable (31) redéclenchable alimenté par la sortie du circuit de traitement, un deuxième circuit monostable (32) redéclenchable alimenté par la sortie de l'amplificateur terminal, un circuit OU (33) à deux entrées connectées respectivement à la sortie des circuits monostables et dont la sortie commande un circuit interrupteur (34) interposé sur la liaison de commande du dispositif obturateur.

8. Dispositif de couplage selon l'une quelconque des revendication 1 à 7, permettant de coupler une station émettrice réceptrice à la ligne bus de transmission optique et caractérisé en ce que la voie électrique est comprise en tout ou partie dans la station annexe qui comporte également les circuits de commande du dispositif obturateur et d'alimentation électrique.

9. Système de transmission par ligne bus optique unidirectionnelle, caractérisé en ce qu'il comporte une station principale de gestion (40) et des stations émettrices et/ou réceptrices (SI à Sn) couplées à la ligne par des dispositifs coupleurs (CI à Cn) selon l'une quelconque des revendications 1 à 8.

## Claims

1. Coupling means for an optical transmission line comprising an optical channel and an electrical channel parallel thereto in the transmission line, an electrooptical means in the optical channel which in accordance with the value of an electrical control signal can assume two states, a photodetector in the electrical channel connected to a processing circuit and to a connecting circuit with a photoemitter and an electrical supply circuit, the arrangement being such that the transmission is normally through the electrical channel and, in the absence of the supply thereof, through the optical channel due to the state change of the electrical control signal of the electrooptical means, in particular for coupling a station to a bus line by means of the electrical channel, characterized by two optical branch means (3, 4) of type Y in which an optical primary line is divided into two secondary lines, the branch means being connected together by a first of their secondary lines (3b, 4b) and by the electrooptical means (7) for forming the optical channel, and being connected by the second of their secondary lines (3c, 4c) to the photoemitter (16) and to the photodetector (13) of the electrical channel, the electrooptical means being of the shutter type which in normal operation has the opaque condition and when the supply (S2) of the electrical channel is absent has the transparent condition.

2. Coupling means according to claim 1, characterized by means (30) for detecting errors of circuits of the electrical channel which initiates the electrical state change command of the shutter means in the case of errors other than the error resulting from the absence of the supply.

3. Coupling means according to claim 1 or 2, characterized in that shutter means comprises a PLZT ceramic plate (7c, 7d) inserted between two polarizers (7a, 7b).

4. Coupling means according to claim 3, characterized in that the electrical supply circuit (20) furnishes a supply signal (S2) for the circuits of the electrical channel and the circuits of the connected station, possibly coupled, and that the control circuit (8) comprises a generator (8a) furnishing a DC voltage (S1) and an interrupter circuit (8b) which is inserted into the control connection which leads from said generator to the shutter means and is controlled by said electrical supply signal.

5. Coupling means according to any one of claims 1 to 4, characterized in that the electrical channel includes the following: a photodiode (13) which supplies a processing circuit acting by amplification (14a) and by shaping (14b), a terminal amplifier circuit (14c) which supplies a light-emitting diode (16), and connecting means (15, 11, 12) for connecting the output of the processing circuit to the input of the terminal amplifier circuit and to the receiving input of a connected station and for connecting the input of the terminal amplifier circuit to the transmission output of the connected station.

6. Coupling means according to claim 5, characterized in that the connecting means comprise a circuit (15a) for storing an address identification which for transferring signals intended for use at the output of the coupler to the terminal amplifier circuit is connected to a first gate circuit (15c), and which for transferring signals which are intended for a connected evaluation station (2) is connected to a second gate circuit (15b).

7. Coupling means according to claim 2 and 5 or 6, characterized in that the means for detecting errors include the following: a first monostable retriggerable circuit (31) which is fed by the output signals of the processing unit, a second monostable retriggerable circuit (32) which is fed by the output signal of the terminal amplifier circuit and an OR circuit (33) with two inputs each connected to the output of the monostable circuits, the output signal of which controls an interruption circuit (34) with is inserted into the control connection of the shutter means.

8. Coupling means according to any one of claims 1 to 7 for coupling a transmission-receive station to an optical transmission bus line, characterized in that the electrical channel is contained completely or partially in the connected station which also contains the circuits for the control of the shutter means and for the electrical supply.

9. Transmission system by means of an optical bus line acting in one direction, characterized by a main treatment station (40) and transmission and/or receiving stations (S1 to Sn) which are coupled to the line by means of coupling means (C1 to Cn) according to any one of claims 1 to 8.

### Patentansprüche

1. Kopplungsvorrichtung für eine optische Übertragunsleitung mit einem optischen Kanal und einem dazu parallelen elektrischen Kanal in der Übertragungsleitung, einer elektro-optischen Vorrichtung in dem optischen Kanal, die entsprechend dem Wert eines elektrischen Steuersignals zwei Zustände annehmen kann, einem an eine Verarbeitungsschaltung und an eine Verbindungsschaltung mit einem Photoemitter angeschlossenen Photodetektor in dem elektrischen Kanal und einer elektrischen Versorgungsschaltung, wobei die Anordnung so getroffen ist, daß die Übertragung normalerweise durch den elektrischen Kanal und, im Falle des Fehlens seiner Versorgung, durch den optischen Kanal infolge der Zustandsänderung des elektrischen Steuersignals der elektro-optischen Vorrichtung erfolgt, insbesondere zum Ankoppeln einer Station an einen Bus mittels des elektrischen Kanals, gekennzeichnet durch zwei optische Abzweigorgane (3, 4) vom Typ Y, bei denen eine optische Primärleitung in zwei Sekundärleitungen aufgeteilt wird, wobei die Abzweigorgane durch eine erste ihrer Sekundärleitungen (3b, 4b) und durch die elektro-optische Vorrichtung (7) zur Bildung des optischen Kanals miteinander verbunden sind, und durch die zweite ihrer Sekundärleitungen (3c, 4c) mit dem Photoemitter (16) und mit dem Photodetektor (13) des elektrischen Kanals verbunden sind, und wobei die elektro-optische Vorrichtung vom Typ eines Verschlusses ist, der im normalen Betrieb den lichtundurchlässigen Zustand und bei fehlender Versorgung (S2) des elektrischen Kanals den lichtdurchlässigen Zustand hat.

2. Kopplungsvorrichtung nach Anspruch 1, gekennzeichnet durch Mittel (30) zur Feststellung von Fehlern von Schaltungen des elektrischen Kanals, die den elektrischen Zustandsänderungsbefehl der Verschlußvorrichtung im Falle von anderen Fehlern als dem aus dem Fehlen der Vorsorgung resultierenden Fehler auslös.

3. Kopplungsvorrichtung nach Anspruch 1 oder 2, dadurch gekennzeichnet, daß die Verschlußvorrichtung eine zwischen zwei Polarisatoren (7a, 7b) eingefügte PLZT-Keramikplatte (7c, 7d) enthält.

4. Kopplungsvorrichtung nach Anspruch 3, dadurch gekennzeichnet, daß die elektrische Versorgungsschaltung (20) ein Versorgungssignal (S2) für die Schaltungen des elektrischen Kanals und die Schaltungen der angeschlossenen Station, die gegebenenfalls angekoppelt ist, erzeugt, und daß die Steuerschaltung (8) einen eine Gleichspannung (S1) erzeugenden Generator (8a) und eine Unterbrechungsschaltung (8b) enthält, die in die Steuerverbindung eingefügt ist, die von diesem Generator zur Verschlußvorrichtung führt, der von diesem elektrischen Versorgungssignal gesteuert wird.

5. Kopplungsvorrichtung nach einem der Ansprüche 1 bis 4, dadurch gekennzeichnet, daß der elektrische Kanal folgendes enthält: ein Photodiode (13), die eine durch Verstärkung (14a) und durch Formung (14b) wirkende Verarbeitungsschaltung speist, eine Endverstärkerschaltung (14c), die eine Leuchtdiode (16) speist, und Verbindungsmittel (15, 11, 12) zum Verbinden des Ausgangs der Verarbeitungsschaltung mit dem Eingang der Endverstärkerschaltung und mit dem Empfangseingang einer angeschlossenen Station und zum Verbinden des Eingangs der Endverstärkerschaltung mit dem Sendeausgang der angeschlossenen Station.

6. Kopplungsvorrichtung nach Anspruch 5, dadurch gekennzeichnet, daß die Verbindungsmittel eine Schaltung (15a) zum Speichern einer Adressenidentifizierung enthalten, die zur Übertragung von Signalen, die für eine Benutzung am Ausgang des Kopplers bestimmt sind, zur Endverstärkerschaltung an eine erste Torschaltung (15c) angeschlossen ist, und die zur Übertragung von Signalen, die für eine angeschlossene Auswertungsstation (2) bestimmt sind, an eine zweite Torschaltung (15b) angeschlossen sind.

7. Kopplungsvorrichtung nach Anspruch 2 und nach Anspruch 5 oder 6, dadurch gekennzeichnet, daß die Mittel zur Feststellung von Fehlern folgendes enthalten: eine erste monostabile, wieder auslösbare Schaltung (31), die vom Ausgangssignal der Verarbeitungsschaltung gespeist wird, eine zweite monostabile, wieder auslösbare Schaltung (32), die vom Ausgangssignal der Endverstärkersschaltung gespeist wird, und eine ODER-Schaltung (33) mit zwei Eingängen, die jeweils mit dem Ausgang der monostabilen Schaltungen verbunden sind und deren Ausgangssignal eine Unterbrechungsschaltung (34) steuert, die in die Steuerverbindung der Verschlußvorrichtung eingefügt ist.

8. Kopplungsvorrichtung nach einem der Ansprüche 1 bis 7 zum Koppeln einer Sende-Empfangs-Station an einen optischen Übertragungs-Bus, dadurch gekennzeichnet, daß der elektrische Kanal ganz oder teilweise in der angeschlossenen Station enthalten ist, die auch die Schaltungen zur Steuerung der Verschlußvorrichtung und zur elektrischen Versorgung enthält.

9. Übertragungssystem mittels einer in einer Richtung wirksamen optischen Bus-Leitung, gekennzeichnet durch eine Hauptbehandlungsstation (40) und Sende-und/oder Empfangs-Stationen (S1 bis Sn), die an die Leitung mittels Kopplungsvorrichtungen (C1 bis Cn) gemäß einem der Ansprüche 1 bis 8 angekoppelt sind.

# Fig_1

# Fig_2

0 002 971

Fig. 3

# Fig_4

# Fig_5

0 002 971

# Fig_6

# Fig_7

4